# EUROPÄISCHE PATENTANMELDUNG

(11) **EP 1 503 163 A2**
(43) Veröffentlichungstag der Anmeldung: **02.02.2005**
(21) Anmeldenummer: 04017044.1
(22) Anmeldetag: 20.07.2004
(51) Int. Cl.: F28D 20/00, F28F 21/04

(54) **Wärmespeicher**

(30) Priorität: 01.08.2003 DE 10335425
(71) Anmelder: Öko-Insel Energietechnik GmbH, 02991 Laubusch (DE)
(72) Erfinder: Rudolph, Andreas, 01920 Ossling/OT Döbra (DE)
(74) Vertreter: Kaufmann, Sigfrid, Doz. Dr.-Ing. habil.

(57) **Zusammenfassung**

Die Erfindung betrifft einen Wärmespeicher, der aus einer Kombination eines wärmeleitenden und eines wärmespeichernden festen Körpers besteht. Aufgabe der Erfindung ist es, die üblicherweise auftretenden Spannungen zwischen diesen beiden Körpern nahezu vollständig zu verhindern. Erfindungsgemäß ist hierfür vorgesehen, daß die wärmeleitende Einlagerung (2) von einem hochporösen keramischen Werkstoff (4) ummantelt ist. In einer bevorzugten Ausführungsvariante besteht der Wärmespeicher aus Metallschaum.

## Beschreibung

Die Erfindung betrifft einen Wärmespeicher. Ein Wärmespeicher der genannten Art besteht aus einer Kombination eines wärmeleitenden und eines wärmespeichernden festen Körpers. Mit Hilfe von wärmeleitenden Einlagerungen wird Wärme rascher und umfassender in ein wärmespeicherndes Medium eingebracht.

EP 299 903 A1 offenbart ein Verfahren zur Herstellung eines Wärmespeichermediums für den direkten Kontakt; hierbei wird ein Körper aus Grundmetall und eine in sich zusammenhängende Keramikschicht, die einstückig mit dem Metallkörper ausgebildet ist und diesen Grundkörper einkapselt, vorgeschlagen.

DE 197 43 579 A1 beschreibt ein Verfahren zur Herstellung einer thermomechanischen Wärmedämmschicht, bei dem eine keramische Wärmedämmschicht durch thermisches Spritzen auf eine metallische Komponente aufgebracht wird, wobei die Wärmedämmschicht während oder nach dem Aufbringvorgang gestrahlt wird. Im weiteren legt es eine Wärmedämmschicht offen, die durch thermisches Spritzen auf eine metallische Komponente aufgebracht ist, keramisch ist und eine poröse Struktur aufweist, wobei die Wärmedämmschicht durch Strahlen gebildete, oberflächennahe Risse aufweist.

Es ist bekannt, metallische Werkstoffe in poröse keramische Werkstoffe einzubringen und Metall-Keramische Verbundwerkstoffe, Ceramic-Metal-Matrix-Components, zu schaffen. Beispielgebend dafür ist das Verfahren des Pressure-Infiltration-Castings oder der Liquid-Metal-Infiltration. Des weiteren sind pulvermetallurgische Verfahren, Sprühverfahren und direkte Verfahren zur Herstellung von Verbundwerkstoffen, z.B. Folien-Keramik-Schicht-Verbundwerkstoffe, bekannt. Die so hergestellten Metall-Keramik-Verbundwerkstoffe finden primär Anwendung in technologisch hochwertigen und komplexen Bereichen.

Wärmespeicher der genannten Art haben vielfach die Funktion, zum verringerten Energieverbrauch in technischen Prozessen, z. B. innerhalb von Brennöfen, beizutragen; gleichzeitig soll eine einfache, kostengünstige Herstellung gewährleistet sein.

Bei konstanten, ununterbrochenen technischen Prozessen, bei denen hohe Energieeinträge erfolgen, etwa bei einem kontinuierlich betriebenen Tunnelofen, dient der für die Bewandung der Anlage eingesetzte Werkstoff primär der Wärmedämmung, um den Energieverlust zu mindern. Im allgemeinen wird ein derartiger Tunnelofen, als Beispiel für einen permanent betriebenen Industrieofen, nur vergleichsweise geringen Temperaturschwankungen ausgesetzt. Es bestehen somit nur eingegrenzte Anforderungen an die Bewandung des Ofens, insbesondere bestehen nur geringe Anforderungen an die Temperaturwechselbeständigkeit des Werkstoffes.

Bei nicht konstanten, diskontinuierlichen Prozessen, beispielsweise innerhalb eines Industrieofens, steht das Problem, daß das Regime für die notwendigen Beladungsvorgänge zu einem nachhaltigen Wärmeverlust führt. Dieser Energieverlust muß in einem nachfolgenden Prozeßschritt kompensiert werden, das heißt, der Ofen muß wieder auf Betriebstemperatur aufgeheizt werden; die daraus folgenden Energiekosten bestimmen wesentlich die Kosten des Fertigungsprozesses.

Bei den bekannten Wärmespeichern, die eine wärmeleitende Einlagerung implizieren, führen die unterschiedlichen thermischen Eigenschaften dieser wärmeleitenden Einlagerung und des wärmespeichernden keramischen Grundkörpers, insbesondere die unterschiedlichen Wärmeausdehnungen, zu Spannungen zwischen diesen beiden Körpern.

Es ist die Aufgabe der Erfindung, diesen Nachteil des Standes der Technik zu beseitigen und insbesondere einen Wärmespeicher vorzuschlagen, der rasch aus der Umgebung Wärmeenergie aufnimmt, sie möglichst dauerhaft speichert und dabei gleichzeitig die Voraussetzungen erfüllt, daß er einfach und kostengünstig herstellbar ist. Zudem soll er geeignet sein, ohne weiteres in diskontinuierlichen Prozessen, wie oben beschrieben, eingesetzt zu werden.

Diese Aufgabe wird erfindungsgemäß durch die kennzeichnenden Merkmale des Hauptanspruches gelöst. Weitere vorteilhafte Ausführungen ergeben sich aus den nachfolgenden Ansprüchen.

Der Erfindung liegt der Gedanke zu Grunde, einen Wärmeleiter mit einem Wärmespeicher so zu kombinieren, daß gegenüber dem Stand der Technik eine nachhaltige Verbesserung erreicht wird. Insbesondere wird mit Hilfe der wärmeleitenden Einlagerungen die Wärme rascher und umfassender in ein wärmespeicherndes Medium eingebracht.

Die Eigenschaften der Wärmeleitung werden durch die Werkstoffwahl und die Geometrie der wärmeleitenden Einlagerungen in einen keramischen Grundkörper bestimmt.

Die wärmeleitende Einlagerung liegt vollständig im Inneren eines Grundkörpers, welcher in die Gruppe der keramischen Werkstoffe einzuordnen ist. Erfindungsgemäß ist die innen liegende, wärmeleitende Einlagerung von zwei weiterführenden Schichten eingefaßt.

Eine erste vollständig umgebende Schicht ist als Schutzschicht ausgebildet. Diese Schutzschicht verhindert ungewollte chemische Reaktionen und Zersetzungsprozesse der wärmeleitenden Einlagerung. Vorzugsweise werden die vorteilhaften Eigenschaften von Graphit für eine derartige Schutzschicht verwendet.

Darauf folgt eine vollständig umschließende Kompensationsschicht, wobei der entstehende Körper wiederum vollständig in dem eigentlichen wärmespeichernden Grundkörper liegt. Der wärmespeichernde Grundkörper besteht aus einem keramischen Werkstoff.

Der Erfindung liegt also der Gedanke zugrunde, die wärmeleitende Einlagerung mit einer oder mehreren Kompensationsschichten zu ummanteln und diese Schichten aus einem porösen keramischen Werkstoff auszubilden. Diese porösen keramischen Kompensationsschichten dienen dazu, die auftretenden Materialspannungen zu vermindern bzw. die Auswirkungen dieser Spannungen herabzusetzen. Insbesondere werden durch eine oder mehrere Kompensationsschichten die unterschiedlichen thermischen Eigenschaften kompensiert. Beispielgebende Parameter für die unterschiedlichen Schichten liegen in der Werkstoffauswahl, der Porosität, der thermische Eigenschaften und der Prozeßtechnik.

Gemäß der Erfindung sind die Kompensationsschichten mit einer hohen Porosität ausgestattet. Die Gesamtporosität, also der prozentuale Porenvolumenanteil am Gesamtvolumen des Körpers, die üblicherweise von unter 0,5% bei einer hochfesten Hochleistungskeramik bis zu 95% bei einer hochporösen Filter- bzw. Schaumkeramik reicht, beträgt erfindungsgemäß mindestens 55%.

Diese Porosität, die in bekannter Weise die thermischen Eigenschaften des keramischen Werkstoffes bestimmt, wird mittels künstlicher Porenbildner, die in die Ausgangsmasse der Rohkeramik eingelagert wurden und die während des Sintervorgangs ausbrennen, erzeugt.

Mit Vorteil sind somit die thermischen Eigenschaften der wärmeleitenden Einlagerung, also des Kerns, schrittweise kontrolliert nach außen an die Eigenschaften des wärmespeichernden Grundkörpers angepaßt. Die Aufbringung der Kompensationsschichten erfolgt schrittweise in mehreren Brennvorgängen; ggf. kann auf der ersten Schicht eine oder mehrere weiterer Schichten aufgebracht werden, die zudem bei Bedarf mechanisch oder thermisch bearbeitet und/oder glasiert werden können.

Als wärmeleitende Einlagerungen werden metallische oder keramische Werkstoffe eingesetzt. Metallische Werkstoffe sind beispielgebend Stahl-Legierungen, insbesondere warmfeste und hochwarmfeste Stähle und Nicht-Eisen-Legierungen, insbesondere der Legierungsgrundstoffe Al oder Cu.

Ein nicht-metallischer Werkstoff ist vorzugsweise Siliciumcarbid, SiC, aus der Gruppe der Nicht-Oxid-Keramischen-Werkstoffe, der sich durch gute Wärmeleitfähigkeit und hohe Temperaturbeständigkeit auszeichnet.

Ein metallischer wärmeleitender Grundkörper ist mit Vorzug porös als offenporiger oder geschlossenporiger Metallschaum ausgebildet. Namentlich die Kombination offenporiger Metallschaum und hochporöse keramische Kompensationsschicht sichert einen nahezu spannungsfreien Verbundwerkstoff.

Der Wärmespeicher ist bevorzugt für einen Temperaturbereich, der unterhalb des Schmelzpunktes des metallischen Werkstoffes des wärmeleitenden Grundkörpers liegt, ausgelegt.

### [DIGIT1]

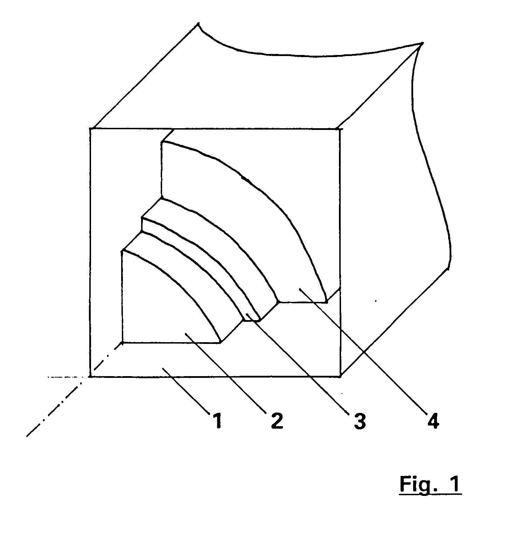

Im folgenden wird die Erfindung anhand der beigefügten Zeichnung näher erläutert. Figur 1 zeigt hierfür in einer Schemadarstellung den prinzipiellen Aufbau eines Wärmespeichers gemäß der Erfindung.

Der prinzipielle Aufbau des Wärmeleiters nach der Erfindung wird nun folgend von innen nach außen dargestellt.
Im Inneren des Wärmespeichers liegt die wärmeleitende Einlagerung 2; die von der Schutzschicht 3 vollständig umgeben ist.
Im weiteren ist diese Kombination von mehreren thermischen Kompensationsschichten 4 vollständig umgeben. Die Kompensationsschichten 4 vermindern die thermischen Spannungen zwischen der Einlagerung 2 und dem keramischen Grundkörper 1. Die Einlagerung 2 mit der Schutzschicht 3 und die umgebende Kompensationsschicht 4 sind vollständig in dem wärmespeichernden Grundkörper 1 eingelagert.

Bei einem ersten Ausführungsbeispiel, das von einem Einsatz des Wärmespeichers im niederen Temperaturbereich von etwa 200°C (beispielgebend innerhalb eines diskontinuierlichen Prozesses, wie er in einem Trocknungsofen für Keramikbauteile auftritt) ausgeht, besteht die wärmeleitende Einlagerung 2 aus einer Al-Cu-Legierung, die thermische Kompensationsschicht 4 aus einer hochporösen Al₂O₃-Keramik mit einer Porosität von 60% und der wärmespeichernde Grundkörper 2 aus getrockneter Tonerde.

In einem weiteren Ausführungsbeispiel, bei dem der Wärmespeicher für Einsatzgebiete mit einem Temperaturbereich von etwa 1000°C (z. B. in Industrieöfen für keramische Verbundwerkstoffe) vorgesehen ist, besteht dieser aus der wärmeleitenden Einlagerung 2 aus hochwarmfesten Stahl, aus zwei Kompensationsschichten 4 aus hochporöser Keramik, die die Einlagerung 2 ummanteln und den Wärmespeicher und den Grundkörper 2 aus Al₂O₃. Die Kompensationsschichten 4 sind in getrennten Brennvorgängen aufgebracht und weisen eine unterschiedliche Porosität von 72 bzw. 58% auf.

Die in den Zeichnungen verwendeten Bezugszeichen haben folgende Bedeutung:
- 1: wärmespeichernder Grundkörper
- 2: wärmeleitende Einlagerung
- 3: Schutzschicht
- 4: (thermische) Kompensationsschichten

## Patentansprüche

1. Wärmespeicher bestehend aus einem Wärme speichernden Grundkörper (1) aus der Gruppe der keramischen Werkstoffe, welcher im Inneren eine wärmeleitende Einlagerung (2) besitzt, die von einer Schutzschicht (3) ummantelt ist, und die von der Schutzschicht (3) ummantelte Einlagerung (2) von einer Umhüllung zur Verminderung thermischer Spannungen eingeschlossen ist, **dadurch gekennzeichnet, daß** die Umhüllung aus einer oder mehreren, in nachfolgenden Brennvorgängen aufgebrachten thermischen Kompensationsschichten (4) aus einem hochporösen keramischen Werkstoff, dessen Poren mittels eingelagerter künstlicher Porenbildner erzeugt wurden, besteht.

2. Wärmespeicher nach Anspruch 1, **dadurch gekennzeichnet, daß** die Kompensationsschichten (4) aus unterschiedlichen keramischen Werkstoffen bestehen und/oder eine unterschiedliche Porosität aufweisen.

3. Wärmespeicher nach Anspruch 1 und 2, **dadurch gekennzeichnet, daß** die wärmeleitende Einlagerung (2) aus einem metallischen Werkstoff besteht.

4. Wärmespeicher nach Anspruch 3, **dadurch gekennzeichnet, daß** die wärmeleitende Einlagerung (2) aus einem offen- oder geschlossenporigen Metallschaum besteht.

5. Wärmespeicher nach Anspruch 1, **dadurch gekennzeichnet, daß** die wärmeleitende Einlagerung (2) aus einem keramischen Werkstoff besteht.

6. Wärmespeicher nach Anspruch 5, **dadurch gekennzeichnet, daß** die wärmeleitende Einlagerung (2) aus der Nicht-Oxid-Keramik Siliciumcarbid besteht.

7. Wärmespeicher nach einem oder mehreren der genannten Ansprüche, **dadurch gekennzeichnet, daß** die Schutzschicht (3) aus einem temperaturbeständigen Nicht-Metall-Werkstoff besteht.

8. Wärmespeicher nach Anspruch 7, **dadurch gekennzeichnet, daß** die Schutzschicht (3) aus Graphit besteht.

9. Wärmespeicher nach einem oder mehreren der genannten Ansprüche, **dadurch gekennzeichnet, daß** der Grundkörper (1) aus gebranntem oder getrockneten Lehm und/oder Ton und/oder Tonerde und/oder tonigen Massen besteht.
